(19) Europäisches Patentamt
European Patent Office
Office européen des brevets

(11) EP 3 375 895 A1

(12) # EUROPEAN PATENT APPLICATION

(43) Date of publication:
**19.09.2018 Bulletin 2018/38**

(51) Int Cl.:
***C22B 7/00*** *(2006.01)* ***C22B 59/00*** *(2006.01)*

(21) Application number: **17382134.9**

(22) Date of filing: **15.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fundación Tecnalia Research & Innovation**
**48160 Derio - Bizkaia (ES)**

(72) Inventors:
- **Siriwardana, Amal**
  **20009 DONOSTIA-SAN SEBASTIAN (ES)**
- **Sánchez Cupido, Laura**
  **20009 DONOSTIA-SAN SEBASTIAN (ES)**
- **Hidalgo Betanzos, Jokin**
  **Mikeletegi Pase DONOSTIA-SAN SEBASTIAN (ES)**
- **Nieto Maestre, Francisco Javier**
  **20009 DONOSTIA-SAN SEBASTIAN (ES)**

(74) Representative: **ZBM Patents - Zea, Barlocci & Markvardsen**
**Plaza Catalunya, 1 2nd floor**
**08002 Barcelona (ES)**

(54) **EXTRACTION OF RARE EARTH ELEMENTS WITH DEEP EUTECTIC SOLVENTS**

(57) It relates to process for the extraction of rare earth elements from a starting product containing them in metal or alloy form which comprises: a) contacting the starting product containing rare earth elements in metal or alloy form with a deep eutectic solvent that consists of a mixture of a hydrogen bond acceptor (HBA) compound (A) selected from a salt of the formula $Cat^+X^-$ (I), betaine or a salt thereof, and carnitine or a salt thereof; and a hydrogen bond donor (HBD) compound (B) in a molar ratio of (A) to (B) from 1:10 to 10:1, wherein the deep eutectic solvent is capable of extracting at least 50% w/w of one or more rare earth elements contained in the starting solid product in less than 5 hours, and b) separating the solvent containing the rare earth elements in dissolution from the undissolved solid.

EP 3 375 895 A1

## Description

## Technical Field

The present invention relates to the field of extraction of rare earth elements (REEs), in particular, to a process for extracting REEs from a sample that contains REEs in metal or alloy form with the use of specific Deep Eutectic Solvents (DESs).

## Background Art

Rare-earth elements (REEs) have become indispensable for the modern life. They are vital ingredients in the energy and transport sectors, but also in a wide range of everyday products. Thus, REEs are used in many application sectors such as permanent magnet industry, rechargeable batteries, autocatalysts, fluid cracking catalysts, polishing powders, glass additives and phosphors. Besides, rare earth Elements such as neodymium (Nd) and dysprosium (Dy), which are found for instance in NdFeB magnets, are considered key enablers of the many emerging green technologies or CleanTech.

The global trade in REE-containing products in 2010 was estimated to be at least at around 13% of the global trade. The demand for these elements which is rising much faster than their supply is projected to increase considerably in the coming years. Currently, China accounts for more than 90% of the REE supply. In fact, more than 70% of light REEs are supplied from one mine in China and also secondary production (recycle) of REE is currently dependent on this country.

Due to Chinese possible shortages in supply, it is crucial to obtain REEs from alternative sources. With this aim rare earth mines in other countries have been restarted and new processes for recycling REEs are currently investigated.

However, these alternatives show several problems and are not cost-effective and/or have negative consequences for the environment. The opening or increase throughput of REE mines is not envisioned to meet the demand. Further, mining processes have a strong negative environmental impact in terms of toxic waste and waste water. Besides, since REEs occur in different ratios in minerals and ores reflecting their natural abundance, there can be a balance problem: the extraction of less abundant REEs (such as neodymium) may generate an excess of the more abundant elements (lanthanum and cerium). In addition, REE mining typically involves the use or handling of huge amounts of carcinogenic toxins as well as radioactive Thorium. Compared to the primary extraction of REEs from ores, the recovery of REEs by recycling REE containing products has the advantage that there are no Thorium issues involved and that the composition of the obtained REE concentrate is less complex. One of the most abundant types of wastes containing REEs are NdFeB magnets. However, the traditional hydrometallurgical processes for recycling REEs that have focused on preconsumer production scrap ("swarf") rather than on end-of-life magnet scrap, involve the use of strong mineral acids and require large amounts of chemicals. As a consequence of these technological difficulties, inefficient collection, and a lack of incentives, commercial recycling of REEs from NdFeB spent magnets is extremely low. Less than 1% of the REEs were being recycled in 2011 by the so-called end-of-life functional recycling or urban mining. On the other hand, an increasing volume of critical raw materials are produced through an ever wider range of advanced products that may end-up as End-of-Life waste in landfills.

Ionic liquids (ILs) such as betainium bis(trifluoromethylsulfonyl)imide [Hbet][$Tf_2N$] have been described in recycling processes of REEs from NdFeB magnets (Dupont D. et al, Green Chem. 2015, 17, 2150-2163). However, ILs are too expensive to be used for large scale industrial applications and their synthesis includes complicated reaction steps and purification processes. Besides toxicology of ILs is yet to be accomplished.

Deep eutectic solvents based on choline chloride mixtures with hydrogen bond donors such as carboxylic acids, amines and alcohols have been studied for dissolving metal oxides. For example, a 2:1 mixture of urea and choline chloride has been described in the dissolution of REEs from coal and coal by-products (Metallurgical and Materials Transactions E 2016, Volume 3, Issue 1, pp. 6-17). However, in this kind of starting products, the type of compound from which rare earth elements (REEs) are extracted is different to that in spent permanent magnets. That is, in coal minerals (bastanite, monazite, xenotime) rare earths are in form of oxides, phosphates or carbonates, while REEs in NdFeB magnets are in metal or alloy form.

From what it is known in the art it is derived that there is still the need of finding a cost effective and efficient REE extraction from abundantly available waste products such as NdFeB magnets that helps to secure the supply of these critical elements.

## Summary of Invention

The inventors have developed a process for the extraction of rare earth elements (REEs) from a product

containing REEs in metal or alloy form, in particular from permanent magnets, by using specific deep eutectic solvents (DESs) that extracts very high amounts of REEs without using any toxic and hazardous mineral acids. Thus, the process of the invention allows obtaining valuable REEs, in particular Nd, Dy and Pr, without having the negative impact for the environment that the prior art processes have.

Additionally, the process of the invention has the advantage that it is economically advantageous since the solvents used are cost effective and end-of-life materials, which are increasingly abundant, can be used as sources of REEs. Moreover, the extraction of the REEs proceeds with high reaction rates as illustrated in the examples. All these features make the process particularly suitable to be used on an industrial scale.

An additional advantage of the process of the invention is that DESs can be often prepared from naturally occurring precursors such as organic acids, inorganic salts, among others.

Although the use of DESs in general for extracting REEs has been previously reported for other types of starting products where the REEs are present in the form of oxides, phosphates or carbonates, the extraction of REEs that are found in metallic or alloy form has not been disclosed.

For a person skilled in the art it is well known that the type of chemical structure, chemical bonds and type of metal affect the dissolution mechanism. For example, in some metal salts, dissolution takes place when the ionic lattice breaks up, the ions are separated from the lattice and then these are solvated. This happens, for example, in group I metal salts in polar solvents such as ammonia or water.

In the case of dissolution of oxides in mineral acids or deep eutectic solvents, dissolution can take place because the protons act as oxygen acceptors and/or a complex is formed between the metallic oxide and the hydrogen bond donor within the deep eutectic solvent or anions contained in the solvent.

In the case of metals and alloys, the atoms are bonded by metallic bonds. Their dissolution is based on charge transfer processes that occur across the interface between the surface and the liquid solution, hence they depend on interfacial potential. Thus, the requirements for a solvent to dissolve ionic and metallic compounds are different.

Accordingly, some DESs may be able to dissolve REEs that are in the form of oxides or salts but not to dissolve REEs that are in metal or alloy form and, conversely, other DES may be able to dissolve REEs that are in metallic or allow form but not the ones in the form of oxides or salts. As shown in the examples, the DES used in the process of the invention, in particular mixtures of choline chloride and lactic acid in different ratios and optionally in the presence of a second carboxylic acid, can dissolve completely or in high amounts within short periods of time the rare earths present in a NdFeB magnet, which are in metallic or alloy form. However, the same type of DES can hardly dissolve the rare earths, and in general metals, present in swarf, which is the waste resulting from the production of magnets, and which contains rare earths in oxide form rather than in metal or alloy form.

Therefore, the present invention relates to a process for the extraction of rare earth elements from a starting solid product containing them in metal or alloy form which comprises the steps of:

a) contacting the starting product containing rare earth elements in metal or alloy form with a deep eutectic solvent that consists of a mixture of

(i) a hydrogen bond acceptor (HBA) compound (A) selected from

a) a salt of the formula $Cat^{+}X^{-}$ (I), wherein $Cat^{+}$ is a cation selected from the group consisting of any ammonium, imidazolium, and phosphonium, and $X^{-}$ is a Lewis base;
b) betaine or a salt thereof;
c) carnitine or a salt thereof; and

(ii) a hydrogen bond donor compound (B)

in a molar ratio of (A) to (B) from 1:10 to 10:1,
wherein the deep eutectic solvent is capable of extracting at least 50% w/w of one or more rare earth elements contained in the starting solid product in less than 5 hours when the step of contacting the starting product containing rare earth elements with the deep eutectic solvent is carried out at a temperature from 60-90 °C and in a weight ratio solid to liquid from 1:15 to 1:150; and
b) separating the solvent containing the rare earth elements in dissolution from the undissolved solid.

**Detailed description of the invention**

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly

set out definition provides a broader definition.

The terms "rare earths" and "rare-earth elements" are used interchangeably in this document and refer to the group of 17 chemically similar metallic elements consisting of 15 lanthanides (cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), terbium (Tb), thulium (Tm), ytterbium (Yb)) and scandium (Sc) and yttrium (Y).

In one particular embodiment, optionally in combination with one or more features of the various embodiments described above or below, the rare earth elements extracted in the process of the invention are selected from the group consisting of neodymium (Nd), dysprosium (Dy), and praseodymium (Pr).

For the purposes of the invention, the term "extraction" of rare earths is to be understood as a the dissolving or leaching process by which the rare earth element is extracted from a solid starting product, in particular a permanent magnet, into a liquid, in this case the specific DES used for the extraction.

The term "Deep eutectic solvent" or "DES" refers to a solvent system formed from a eutectic mixture of Lewis or Brønsted acids and bases which can contain a variety of anionic and/or cationic species. The melting point of a DES is much lower than either of the individual components when mixed in a certain ratio. Deep eutectic solvents have wide liquid range and low vapor pressure. DESs are non-reactive with water, nonflammable, and relatively low cost. Besides, many of them are biocompatible and biodegradable.

For the purposes of the invention, the term "DES" is to be considered different from the term "ionic liquid" or "IL" that refers to a different type of solvent formed from systems composed primarily of one type of discrete anion and cation (Smith E.L. et al, Chem. Rev. 2014, 114, 11060-11082). An ionic liquid (IL) is a salt in the liquid state. Generally, ILs are expensive to be used for large scale industrial applications and often their synthesis involves complicated reaction steps and purification processes. Thus, DESs are now widely acknowledged as an attractive as well as green alternative solvents to ILs.

As mentioned above, the invention relates to a process for the extraction of rare earth elements comprising the use of a deep eutectic solvent that consists of a mixture of a hydrogen bond acceptor (HBA) compound (A) as defined above, and a hydrogen bond donor (HBD) compound (B).

In one embodiment, optionally in combination with one or more features of the various embodiments described above or below, the hydrogen bond acceptor compound (A) is a salt of the formula $Cat^+X^-$ (I).

In the salt of the formula $Cat^+X^-$ (I), the cation $Cat^+$ is selected from the group consisting of a quaternary ammonium cation of formula a), an imidazolium cation of formula b), and a phosphonium cation of formula c), , wherein the chemical formulas a), b) and c) are shown below:

$NR_4^+$

a)

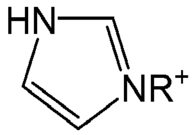

b)

$PR_4^+$

c)

wherein each of the R substituents may be the same or different and is selected from the group consisting of H, phenyl optionally substituted with halogen, and $(C_1\text{-}C_{18})$alkyl optionally substituted with one or more substituents selected from the group consisting of phenyl optionally substituted with halogen, halogen, OH, $\text{-OCO}(C_1\text{-}C_6)$alkyl, -OCOY, $\text{-COO}(C_1\text{-}C_6)$alkyl, and COOH, wherein Y is halogen.

The term $(C_1\text{-}C_n)$alkyl as used herein refers to a saturated branched or linear hydrocarbon chain which contains from 1 to n carbon atoms and only single bonds. Non limiting examples of alkyl groups include methyl, ethyl, propyl, butyl, isopropyl, 2-methylpropyl, pentyl, hexyl, octyl, decyl, and the like. The alkyl groups may be substituted as indicated herein.

Non-limiting examples of ammonium cations include (2-hydroxyethyl)trimethylammonium (choline, Ch), ethyltrimethylammonium, ethylammonium, triethylammonium, triethylmethylammonium, benzyltriethylammonium, methylammonium, dimethylammonium, (2-chloroethyl)trimethylammonium, (2-fluoroethyl)trimethylammonium, (2-bromoethyl)trimethylammonium, ethyl(2-hydroxyethyl)dimethylammonium, benzyl(2-hydroxyethyl)dimethylammonium, bis(2-hydroxyethyl)dimethylammonium, benzyl-bis(2-hydroxyethyl)methylammonium, (2-chlorocarbonyloxyethyl)trimethylammonium, tetrabutylammonium, tetrapropylammonium, (2-hydroxyethyl)diethylammonium, benzyltrimethylammonium, benzyltriethylammonium, benzyl(2-hydroxyethyl)dimethylammonium, diethylammonium, and (2-acetyloxyethyl)trimethylammonium.

Non-limiting examples of imidazolium cations include 1-ethyl-3-methylimidazolium, 1-butyl-3-methylimidazolium, and 1-hexyl-3-methylimidazolium.

Non-limiting examples of phosphonium cations include methyltriphenylphosphonium, benzyltriphenylphosphonium, P-carboxymethyl-tributylphosphonium, trihexyl(tetradecyl)phosphonium, tributyl(tetradecyl)phosphonium, tributyl(octyl)phosphonium, and tetrabutylphosphonium.

In one particular embodiment, optionally in combination with one or more features of the various embodiments described above or below, the cation $Cat^+$ in the salt of the formula (I) is selected from the group consisting of a quaternary ammonium cation of formula a) and a phosphonium cation of formula c) as defined above; even more particularly the cation $Cat^+$ is a quaternary ammonium cation of formula a).

In another embodiment, optionally in combination with one or more features of the various embodiments described above or below, in the formulas a), b) and c) above, more particularly in the formulas a) and c), and even more particularly in the formula a), each R is independently selected from H, benzyl and ($C_1$-$C_{18}$)alkyl (more particularly ($C_1$-$C_{14}$)alkyl, and even more particularly ($C_1$-$C_{12}$)alkyl) optionally substituted as defined above; even more particularly, each R is independently selected from H, benzyl, and ($C_1$-$C_{18}$)alkyl (more particularly ($C_1$-$C_{14}$)alkyl, and even more particularly ($C_1$-$C_{12}$)alkyl) optionally substituted with one or more substituents selected from the group consisting of phenyl, halogen, and OH.

In another embodiment, optionally in combination with one or more features of the various embodiments described above or below, in the formulas a), b) and c) above, more particularly in the a) and c), and even more particularly in the formula c), each R is independently selected from benzyl; phenyl optionally substituted as defined above; and ($C_1$-$C_{18}$)alkyl (more particularly ($C_1$-$C_{14}$)alkyl, and even more particularly ($C_1$-$C_{12}$)alkyl) optionally substituted as defined above.

In another embodiment, optionally in combination with one or more features of the various embodiments described above or below, in the formulas a), b) and c) above, more particularly in the formulas a) and c), and even more particularly in the formula a), at least one of the R substituents is other than H. In another particular embodiment, at least two of the R substituents are other than H.

In another embodiment, optionally in combination with one or more features of the various embodiments described above or below, the cation $Cat^+$ in the salt of the formula (I) is selected from the group consisting of ethylammonium and choline. More particularly, the cation $Cat^+$ is choline.

In the salt of the formula $Cat^+X^-$ (I), the anion $X^-$ is a Lewis base. For the purposes of the invention, the term Lewis base refers to any nucleophilic species containing an unshared pair of electrons capable of sharing with an acid. A Lewis base is therefore an electron-pair donor. Non-limiting examples of Lewis bases $X^-$ are $NO_3^-$, $F^-$, $Cl^-$, $Br^-$, $I^-$, $BF_4^-$, $ClO_4^-$, CN-, $SO_3CF_3^-$, or $COOCF_3^-$.

In one particular embodiment, optionally in combination with one or more features of the various embodiments described above or below, the anion $X^-$ in the salt of the formula (I) is selected from the group consisting of halides, in particular $Cl^-$ or $Br^-$.

Non-limiting examples of the salt $Cat^+X^-$ of formula (I) include choline chloride, choline nitrate, choline acetate, methylammonium chloride, dimethylammonium chloride, ethyl(2-hydroxyethyl)dimethylammonium chloride, ethylammonium chloride, triethylammonium chloride, triethylmethylammonium bromide, benzyltriethylammonium chloride, (2-chlorocarbonyloxyethyl)trimethylammonium chloride, (2-chloroethyl)trimethylammonium chloride, (2-fluoroethyl)trimethylammonium bromide, (2-bromoethyl)trimethylammonium bromide, tetrabutylammonium bromide, tetrabutylammonium chloride, tetrapropylammonium bromide, (2-hydroxyethyl)diethylammonium chloride, benzyltrimethylammonium chloride, benzyltriethylammonium tetrafluoroborate, benzyl(2-hydroxyethyl)dimethylammonium chloride, bis(2-hydroxyethyl)dimethylammonium iodide, benzyl-bis(2-hydroxyethyl)methylammonium chloride, (2-acetyloxyethyl)trimethylammonium chloride, 1-ethyl-3-methylimidazolium chloride, 1-butyl-3-methylimidazolium chloride, 1-hexyl-3-methylimidazolium chloride, benzyltriphenylphosphonium chloride, methyltriphenyl-phosphonium bromide, trihexyl(tetradecyl)phosphonium chloride, tributyl(tetradecyl)phosphonium chloride, tributyl(octyl)phosphonium chloride, and tetrabutylphosphonium chloride.

In another embodiment, optionally in combination with one or more features of the various embodiments described above or below, the hydrogen bond acceptor compound (A) is selected from betaine or a salt thereof, and carnitine or a salt thereof.

For the purposes of the invention betaine refers to N,N,N-trimethylglycine, and carnitine refers to 3-hydroxy-4-N,N,N- trimethylaminobutyrate. In one embodiment, optionally in combination with one or more features of the various embodiments described above or below, carnitine is L-carnitine.

Salts of betaine and carnitine include salts with organic acids such as fumaric acid as well as inorganic acids such as hydrochloric acid. In one embodiment, optionally in combination with one or more features of the various embodiments described above or below, the hydrogen bond acceptor compound (A) is selected from betaine, betaine hydrochloride, carnitine, and carnitine hydrochloride.

In another embodiment, optionally in combination with one or more features of the various embodiments described above or below, the hydrogen bond acceptor compound (A) is selected from the group consisting of carnitine or a salt thereof, betaine or a salt thereof, choline chloride, and ethylammonium chloride. More particularly, the hydrogen bond acceptor compound (A) is choline chloride.

The term "hydrogen bond donor" refers herein to a chemical structure containing a suitable hydrogen bond donor atom bearing one or more protons that is attached to a relatively electronegative atom, such as an oxygen atom or a nitrogen atom. It refers to a group having a hydrogen atom capable of forming a hydrogen bond with an acceptor atom of the compound $Cat^+X^-$. HBD include ($C_1$-$C_{12}$)alcohols, ($C_1$-$C_{12}$)aldehydes, ($C_1$-$C_{18}$)carboxylic acids, ($C_1$-$C_6$)ureas, ($C_1$-$C_{12}$)amides, ($C_1$-$C_{12}$)nitrogenated compounds, ($C_1$-$C_{12}$)aminoacids and ($C_1$-$C_{12}$)sugars.

Non-limiting examples of HBDs include ($C_1$-$C_6$)ureas such as urea, 1-(trifluoromethyl)urea, 1-methylurea, allylurea, 1,3-dimethylurea, 1,1-dimethylurea, thiourea, tetramethylurea; ($C_1$-$C_{12}$)amides such as N-methylacetamide, acetamide, benzamide, 2,2,2-trifluoroacetamide, salicylamide; ($C_1$-$C_{12}$)alcohols such as ethanediol, 9-anthracenemethanol, ethanol, propan-2-ol, mannitol, 8-hydroxyquinoline, methyl salicylate, and phenylsalicylate, triethanolamine, 2-chloroethanol, 4-hydroxy-3-methoxybenzaldehyde (vanillin), p-hydroxybenzaldehyde, benzyl alcohol, phenol, p-methylphenol, o-methylphenol, m-methylphenol, p-chlorophenol, p-aminophenol, xylenol, glycerol, ethylene glycol, triethyleneglycol, 1,4-butanediol, 1,6-hexanediol; ($C_1$-$C_{12}$)aldehydes such as benzaldehyde; ($C_1$-$C_{12}$)aminoacids such as glycine, alanine, lysine, phenylalanine; ($C_1$-$C_{12}$)sugars such as fructose, lactose, saccharin, glucose, xylitol, sorbitol; ($C_1$-$C_{18}$)carboxylic acids such as trifluoroacetic acid, glycolic acid, trichloroacetic acid, glyoxylic acid, benzoic acid, citric acid, mandelic acid, valeric acid, tartaric acid, glutaric acid, m-nitrobenzoic acid, p-hydroxybenzoic acid, glutamic acid, m-aminobenzoic acid, malonic acid, oxalic acid, benzoic acid, phenylacetic acid, phenylpropionic acid, itaconic acid, levulinic acid, propane-1,2,3-tricarboxylic acid (tricarballylic acid), salicylic acid, trans-cinnamic acid, 3,5-dinitrobenzoic acid, nicotinic acid, stearic acid, hippuric acid, oleic acid, terephthalic acid, adipic acid, malic acid, succinic acidacetic acid and lactic acid; and ($C_1$-$C_{12}$)nitrogenated compounds such as aniline, imidazole, hydroxylamine hydrochloride, diaminoethane, 1,2-diaminopropane, pyridine, benzylamine, triethylamine.

In one particular embodiment, optionally in combination with one or more features of the various embodiments described above or below, the hydrogen bond donor (B) is selected from ($C_1$-$C_{12}$)alcohol, ($C_1$-$C_{12}$)aldehyde, ($C_1$-$C_{18}$)carboxylic acid, ($C_1$-$C_{12}$)amide, ($C_1$-$C_{12}$)nitrogenated compound, ($C_1$-$C_{12}$)aminoacid and ($C_1$-$C_{12}$)sugar, more particularly selected from ($C_1$-$C_{12}$)alcohol, ($C_1$-$C_{12}$)aldehyde, ($C_1$-$C_{18}$)carboxylic acid, and ($C_1$-$C_{12}$)amide.

In another embodiment, optionally in combination with one or more features of the various embodiments described above or below, the hydrogen bond donor (B) is a ($C_1$-$C_6$)urea. More particularly, the hydrogen bond donor is a ($C_1$-$C_6$)urea selected from the group consisting of urea, 1-(trifluoromethyl)urea, 1-methylurea, allylurea, 1,3-dimethylurea, 1,1-dimethylurea, thiourea, and tetramethylurea; even more particularly is urea.

In another particular embodiment, optionally in combination with one or more features of the various embodiments described above or below, the hydrogen bond donor (B) is a ($C_1$-$C_{18}$)carboxylic acid. More particularly, the hydrogen bond donor is a ($C_1$-$C_{18}$)carboxylic acid selected from the group consisting of trifluoroacetic acid, glycolic acid, trichloroacetic acid, glyoxylic acid, benzoic acid, citric acid, mandelic acid, valeric acid, tartaric acid, glutaric acid, m-nitrobenzoic acid, p-hydroxybenzoic acid, glutamic acid, m-aminobenzoic acid, malonic acid, oxalic acid, benzoic acid, phenylacetic acid, phenylpropionic acid, itaconic acid, levulinic acid, propane-1,2,3-tricarboxylic acid (tricarballylic acid), salicylic acid, trans-cinnamic acid, 3,5-dinitrobenzoic acid, nicotinic acid, stearic acid, hippuric acid, oleic acid, terephthalic acid, adipic acid, malic acid, succinic acid, acetic acid and lactic acid. Even more particularly, the hydrogen bond donor is a ($C_1$-$C_9$)carboxylic acid, even more particularly is glycolic acid or lactic acid.

Generally, in the deep eutectic solvent, the hydrogen bond acceptor compound (A) and the hydrogen bond donor (HBD) compound (B) are in a molar ratio of (A) to (B) from 1:10 to 10:1. In one particular embodiment, optionally in combination with one or more features of the various embodiments described above or below, the hydrogen bond acceptor compound (A) and the hydrogen bond donor (HBD) compound (B) are in a molar ratio of (A) to (B) from 1:5 to 5:1, more particularly 1:4 to 4:1, even more particularly from 1:1 to 1:5.

In a particular embodiment, optionally in combination with one or more features of the various embodiments described above or below, the hydrogen bond acceptor compound (A) and the hydrogen bond donor (HBD) compound (B) are in a molar ratio of (A) to (B) of 1:1, 1:2, 1:3, 1:4 or 1:5 more particularly 1:2.

The deep eutectic solvent used in the process of the invention may further comprise a second hydrogen bond donor (HBD) compound, thereby forming a ternary deep eutectic solvent. This component may be the same or different from the HBD defined above for the binary DES that consists of a mixture of a hydrogen bond acceptor compound (A), and a hydrogen bond donor (HBD) compound (B).

In one particular embodiment, optionally in combination with one or more features of the various embodiments described above or below, the second hydrogen bond donor of the ternary DES is a ($C_1$-$C_{18}$)carboxylic acid. More particularly, the hydrogen bond donor is a ($C_1$-$C_{18}$)carboxylic acid selected from the group consisting of trifluoroacetic acid, glycolic acid, trichloroacetic acid, glyoxylic acid, benzoic acid, citric acid, mandelic acid, valeric acid, tartaric acid, glutaric acid, m-nitrobenzoic acid, p-hydroxybenzoic acid, glutamic acid, m-aminobenzoic acid, malonic acid, oxalic acid, benzoic acid, phenylacetic acid, phenylpropionic acid, itaconic acid, levulinic acid, propane-1,2,3-tricarboxylic acid (tricarballylic acid), salicylic acid, trans-cinnamic acid, 3,5-dinitrobenzoic acid, nicotinic acid, stearic acid, hippuric acid, oleic acid, terephthalic acid, adipic acid, malic acid, succinic acid, acetic acid and lactic acid. Even more particularly, the second hydrogen bond donor of the ternary DES is a ($C_1$-$C_9$)carboxylic acid, even more particularly is citric acid or

malonic acid, and even more particularly, citric acid.

In one particular embodiment, optionally in combination with one or more features of the various embodiments described above or below, the second HBD in the ternary DES is present in an amount from 1 wt% to 40 wt%, more particularly from 5 wt% to 20 wt%, even more particularly from 10 wt% to 15 wt%, with respect to the total weight of DES.

In another particular embodiment, optionally in combination with one or more features of the various embodiments described above or below, the DES used in the process of the invention is selected from the group consisting of choline chloride:lactic acid, choline chloride:lactic acid and citric acid, choline chloride:lactic acid and malonic acid, betaine:urea, carnitine:glycolic acid, betaine:glycolic acid and ethylammonium chloride:glycolic acid, wherein betaine and carnitine may optionally be in the form of hydrochloride salt.

In another particular embodiment, optionally in combination with one or more features of the various embodiments described above or below, the DES used in the process of the invention is selected from the group consisting of:

- 100% wt/wt of choline chloride:lactic acid in a molar ratio 1:2,
- 85% wt/wt of choline chloride:lactic acid in a molar ratio 1:1 + 15% wt/wt of citric acid,
- 85% wt/wt of choline chloride:lactic acid in a molar ratio 1:2 + 15% wt/wt citric acid,
- 85% wt/wt of choline chloride:lactic acid in a molar ratio 1:3 + 15% wt/wt citric acid,
- 90% wt/wt of choline chloride: lactic acid in a molar ratio 1:2 + 10% wt/wt malonic acid,
- Betaine hydrochloride:urea in a molar ratio from 1:2 and 1:4,
- L-carnitine:glycolic acid in a molar ratio of 1:5,
- Carnitine:glycolic acid 1:3, 1:4, 1:5,
- Betaine:glycolic acid in a molar ratio from 1:3, and
- Ethylammonium chloride:glycolic acid in a molar ratio from 1:1 and 1:2.

The use of these DESs led to the best compromise between high reaction rates and operational effectiveness.

As mentioned above, the deep eutectic solvent used in the process of the invention is capable of extracting at least 50% w/w of one or more rare earth elements contained in the starting solid product in less than 5 hours, when the step a) of contacting the starting product containing rare earth elements with the deep eutectic solvent is carried out at a temperature from 60-90 °C and in a weight ratio solid to liquid from 1:15 to 1:150, more particularly at a temperature of 85 °C and in a weight ratio solid to liquid of 1:50. In one particular embodiment, optionally in combination with one or more features of the various embodiments described above or below, the deep eutectic solvent used in the process of the invention is capable of extracting at least 70% w/w of one or more rare earth elements contained in the starting solid product in less than 5 hours, more particularly, is capable of extracting at least 90% w/w of one or more rare earth elements contained in the starting solid product in less than 5 hours in the above defined conditions. In another particular embodiment, optionally in combination with one or more features of the various embodiments described above or below, the deep eutectic solvent used in the process of the invention is capable of extracting at least 50% w/w, at least 70% w/w, or at least 90% of one or more of Nd, Dy and Pr in less than 5 hours, when the step a) of contacting the starting product containing one or more of Nd, Dy and Pr with the deep eutectic solvent is carried out at a temperature from 60-90 °C, more particularly at 85 °C, in a weight ratio solid to liquid from 1:15 to 1:150, more particularly 1:50.

The % of extraction as defined above, also referred herein to as efficiency or percentage of metals leached, can be determined by comparing: i) the content of one or more rare earth elements (REEs) in the deep eutectic solvent that have been dissolved after contacting the starting product containing REEs with the deep eutectic solvent (step a) for the specified time above, and ii) the content of the same REEs in the starting solid product which is contacted with the DES in step a) of the process.

The contents i) and ii) above can be determined by using inductive coupled plasma optical emission spectroscopy (ICP-OES), which is a technique well-known in the art. The skilled person will know how to carry out the above measurements. For example, these measurements can be carried out in the conditions shown in the examples by using a ICP-OES spectrometrer such as e.g. the equipment VISTA MPX axial CCD simultaneous ICP/OES.

The % of extraction or efficiency of the process of the invention can be calculated by the following formula:

$$\text{Efficiency} = [(x*y)/1.000.000] / [(z*w)/1.000.000] *100$$

wherein x is the concentration (in ppm) of REE in the DES as measured by ICP-OES; y is the amount in g of the sample of DES used in the experiment; z is the concentration (in ppm) of REE in the starting solid as measured by ICP-OES; and w is the amount in g of the sample of the starting solid used for the experiment.

DESs are usually obtained by mixing a hydrogen bond acceptor (HBA) compound (A) as defined above, in particular a quaternary ammonium salt, and a hydrogen bond donor (HBD) compound of formula (B) as defined above (e.g., alcohol, sugar or carboxylic acid) in the desired amount. Thus, it also forms part of the invention a process for the

preparation of a deep eutectic solvent that consists of a mixture of a hydrogen bond acceptor compound (A), and a hydrogen bond donor (HBD) compound (B) in a molar ratio of (A) to (B) from 1:10 to 10:1, comprising mixing both components in the suitable ratio, preferably by heating at a suitable temperature such as a temperature around 80 °C and for a suitable period of time, for example 2 hours.

As mentioned above, the process of the invention allows the extraction of REEs which are present in the starting material in metallic or alloy form.

In one particular embodiment, optionally in combination with one or more features of the various embodiments described above or below, the starting material in which the REEs are present in metallic or alloy form is a permanent magnet. More particularly, the permanent magnet is an end-of-life product.

For the purposes of the invention, the term "end-of-life" (EOL) product refers to a product containing REEs in metallic or alloy form that has reached the end of their useful life. Examples of such EOLs include without limitation permanent magnets that can be contained in mobile phones, hard disk drives (HDDs), computers and operipherals, consumer electric and electronic devices, electric bicycles, electric and hybrid vehicles, and wind turbine generators; nickel metal hydride batteries that can be contained for example in rechargeable batteries or in electric and hybrid vehicles; phosphor fluorescent lamps, LEDs, LCD backlights, plasma screens, and cathode-ray tubes (CRTs). Permanent magnets include magnets based upon neodymium-iron-boron (NFeB) alloys (NdFeB magnets) or upon samarium-cobalt alloys.

NdFeB magnets are comprised of an $Nd_2Fe_{14}B$ matrix phase, surrounded by a neodymium-rich grain boundary phase, with small admixtures of praseodymium, gadolinium, terbium, and especially dysprosium, as well as other elements such as cobalt, vanadium, titanium, zirconium, molybdenum or niobium. The grain boundary phase can also contain copper, aluminum or gallium. Dysprosium is added to magnets to increase their temperature stability against demagnetization. The dysprosium content in NdFeB magnets widely varies, depending on the application.

SmCo magnets are based upon $SmCo_5$ or $Sm_2Co_{17}$. These magnets may contain admixtures of different transition metals, such as Fe, Zr and Cu.

In one particular embodiment, optionally in combination with one or more features of the various embodiments described above or below, the permanent magnet is a NdFeB permanent magnet.

The process of the invention for the extraction of rare earth elements from a starting product containing them in metal or alloy form which comprises contacting the starting product containing rare earth elements in metal or alloy form with a deep eutectic solvent as previously defined. The process is carried out preferably by heating at a suitable temperature, preferably from 40 to 90 °C, even more preferably from 60 to 90 °C, and even more preferably at 85 °C, preferably under stirring, for a suitable period of time, preferably from 2 to 20 h.

The starting product is preferably in form of powder, more preferably having a d(0,9) from 50 to 1000 μm, more preferably from 300 to 600 μm. The particle size and size distribution can be determined by using dynamic light scattering (DLS) technique. In the examples given herein, the magnet powder used was measured using a Malvern Mastersizer 2000 particle size analyzer provided with two light sources: red light provided by a HeNe gas laser (beam wavelength 633 nm) and a blue light by a LED (beam wavelength 436 nm) which allowed measuring a particle size range from 0,020 μm to 2000 μm. The measurements were based on the Mie theory which presumed that the particles measured were perfect spheres. Therefore, the equipment used the equivalent spheres method, considering the volume of an equivalent sphere, to estimate the diameter of the particles.

For the purposes of the invention, d(0,9) refers to the particle size at which an accumulated volume of the powder is 90% from a cumulative size distribution curve.

For the preparation of the starting product in form of powder, the skilled person may use techniques well-known in the art. By way of example, in the case of NdFeB magnets, the powder can be obtained from uncoated magnets, treating them by hydrogen decrepitation, and finally sieving to the desired particle size.

By contacting the DES and the sample the REEs are leached, i.e, the fluid phase effects direct extraction of the REEs from the solid product.

This step is preferably carried out in a weight ratio solid to liquid from 1:15 to 1:150, more preferably in a weight ratio solid to liquid of 1:20, 1:50, and 1:100.

The process of the invention also comprises the step of separating the solid product and the solvent containing the rare earth elements extracted from the starting solid product. This step may be carried out using solid-liquid separation methods well-known in the art. For example, this step can be carried out by centrifugation or vacuum filtration.

Previous to the leaching step, the process may include some pre-steps including dismantling, sorting, preprocessing of the sample. In case of permanent magnets, these steps may include first demagnetization through thermal or non thermal methods and then dismantling and/or crushing. Further it is also possible to separate the rare earths from the transition metals and other elements (for example removing Ni coating covering the NdFeB magnets) present in the starting products, magnet alloys. The recycled REE mixtures are then separated into the individual REEs (in general as rare-earth oxides).

The recovery of the REEs from the solution can be carried out by methods well-known in the art such as

precipitation of the REE salts, and further conversion to REE, quite often with REE separation or up-concentration in between.

For example, after the leaching, the viscosity of the solution are adjusted by adding $H_2O$. For obtaining rare earth oxalates, oxalic acid is added in an amount between 1 and 2 the stoichiometric amount with respect the moles of rare earths, preferably 1.5, and the rare earth oxalates are precipitated. If desired, the oxalates obtained in this process may be converted into rare earth oxides by calcination at 900 °C during 4 hours. The composition and purity of the oxalates can be determined by inductive coupled plasma optical emission spectroscopy (ICP-OES) as mentioned above. For the sample preparation, a known quantity of Rare Earth oxalate is made up to a known volume in HCl 6 M (the rare earth oxalate can be diluted 1/100 - 1/10 times depending on the estimated concentration, reducing the matrix effect) and it is injected in Inductively coupled plasma atomic emission spectroscopy (ICP-OES).

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

## Examples

ICP/OES

The equipment used for the experiments below was VISTA MPX axial CCD simultaneous ICP/OES. The wavelength selected for each element was: Nd 378.425 nm, Dy 353.602 nm, Pr 410.072 nm. The measuring parameters were: replicate read time: 10s; Instrument stabilization delay 10s; Replicates: 5; Power 1.25kW; Plasma flow 15L/min; Auxiliary flow 1.5; Nebulizer pressure 190kPa/ Calibration parameters: curve type: linear, Correlation coefficient limit: 0.999, Maximum error: 10%.

The used calibration standard was the following:

Table 1

| | Blank | S1 | S2 | S3 | S4 | S5 |
|---|---|---|---|---|---|---|
| Nd (mg/l) | 0 | 0.2 | 0.5 | 1 | 5 | 10 |
| Dy (mg/l) | 0 | 0.05 | 0.1 | 0.25 | 0.5 | 2.5 |
| Pr (mg/l) | 0 | 0.05 | 0.1 | 0.25 | 0.5 | 2.5 |

The standards were prepared from: Nd standard solution for ICP Concentration 1000 mg/l (Inorganic ventures); Dy standard solution for ICP Concentration 1000 mg/l (Inorganic ventures); and Pr standard solution for ICP Concentration 1000 mg/l (CPAchem).

Verification standard (Maximum error: 10%)

| | VS |
|---|---|
| Nd (mg/l) | 1 |
| Dy (mg/l) | 1 |
| Pr (mg/l) | 1 |

The standard used for the verification above was commercial and was the following one: Std# 1 Rare Earth metals plasma emission standard (ICP) MISA-01-1 ISOSTANDARD MATERIAL, S.L.

General method for the preparation of DES

The adequate amounts of the hydrogen bond donor and hydrogen bond acceptor or acceptors were placed together in the same recipient and stirred magnetically at 100 °C for 2 hours. The original mixture of solids turned into a transparent and homogenous fluid which was the deep eutectic solvent.

Following the general method described above, the following DES were obtained:

Table 2

| Example | DES |
|---|---|
| 1 | choline chloride/lactic acid 1:1 + 15% citric acid |
| 2 | choline chloride/lactic acid 1:2 + 15% citric acid |
| 3 | choline chloride/lactic acid 1:3 + 15% citric acid |
| 4 | choline chloride/lactic acid 1:2 + 10 % malonic acid |
| 5 | choline chloride/lactic acid 1:2 |

General method for the extraction of rare earth elements

The REE containing starting material was magnet powder coming from hard disk drives and having the following particles size distribution: d(0,1): 40.844 μm, d(0,5): 291.150 μm, and d(0,9): 509.484 μm, and having the composition shown in Table 3 as measured by inductive coupled plasma (ICP-OES) (two different measures).

Table 3

| | **Magnet powder composition** | |
|---|---|---|
| | 1 | 2 |
| Nd (%) | 26.8 | 25.7 |
| Dy (%) | 4.43 | 4.35 |
| Pr (%) | 0.58 | 0.58 |
| Co (%) | 0.06 | 0.06 |
| Cu (%) | 0.06 | 0.06 |
| Fe (%) | 66 | 66.8 |
| Ca (%) | 0.08 | 0.09 |
| Al (%) | 0.31 | 0.31 |
| B (%) | 1.03 | 1.07 |

For measuring the content of REEs in the starting material, approximately 0.2 g of solid were contacted with 8 ml of aqua regia (mixture of nitric acid and hydrochloric acid in a molar ratio of 1:3), and the mixture was heated it in a microwave according to the following heating ramp:

Table 4

| Step | Temperature °C | Time min |
|---|---|---|
| 1 | 130 | 10 |
| 2 | 150 | 10 |
| 3 | 180 | 10 |
| 4 | 200 | 10 |

Then, the solution was made up to 100 ml in distilled water and injected in the ICP-OES spectrometer.

The magnet powder was contacted with the deep eutectic solvents of examples 1-5 at 85 °C under magnetic stirring. The specific wt/wt ratio (solid/liquid) was 1:50. The chemical composition of the DES dissolution after contacting the magnet powder was analysed by inductively coupled plasma atomic emission spectroscopy (ICP-OES) at different time points. After the contact the dissolution turned into green or red colour, depending on the DES used. The content of the REEs dissolved was measured by ICP-OES: 0.5 g of DES containing the REEs were made up to 25 ml of HCl 6

M. Then 1 ml of such dissolution was made up to 25 ml in distilled water and injected in the ICP-OES spectrometer.

The dissolution was centrifuged in order to remove the unsolvable particles. Then $H_2O$ was added to reduce viscosity. Oxalic acid was added in an amount of 1.5 times the stoichiometric amount of rare earths present in the dissolution. Rare earth oxalates formed in form of white precipitate, and they were separated by vacuum filtration. Finally, the rare earth oxalates was converted into rare earth oxide by calcination at 900 °C during 4 hours.

Comparative example

A swarf dissolution containing REEs was treated with the DES of example 1 (choline chloride/Lactic acid molar ratio 1:2 + 15 % citric acid) at 85 °C under magnetic stirring. The specific wt/wt ratio (solid/liquid) was 1:50. The chemical composition of the DES dissolution after contacting the magnet powder was analysed by inductively coupled plasma atomic emission spectroscopy (ICP-OES) at different time points.

Results

In the following tables the efficiency of the process of extracting the REEs from the magnet powder (as described in the general method above) with the DESs of the examples 1-5 is shown. The efficiency or % of metals leached was calculated according to the following formula:

$$\text{Efficiency}= [(x*y)/1.000.000] / [(z*w)/1.000.000] *100$$

wherein x is the concentration (in ppm) of REE in the DES as measured by ICP-OES; y is the amount in g of the sample of DES used in the experiment; z is the concentration (in ppm) of REE in the starting solid as measured by ICP-OES; and w is the amount in g of the sample of the starting solid used for the experiment.

Table 5. Choline chloride/lactic acid 1:1 molar ratio + 15% wt citric acid

Table 5

| | **% metals leached** | | |
|---|---|---|---|
| **Time of reaction (h)** | **Nd** | **Dy** | **Pr** |
| 0.5 | 9.73 | 6.10 | 9.83 |
| 1 | 16.63 | 11.28 | 16.51 |
| 1.5 | 23.35 | 17.16 | 15.05 |
| 2 | 36.71 | 28.20 | 28.69 |
| 3 | 64.58 | 49.77 | 56.28 |
| 4 | 87.85 | 67.75 | 67.70 |
| 5 | 100.0 | 82.93 | 78.23 |
| 20 | 100.0 | 100.0 | 100.0 |

Table 6. Choline chloride/lactic acid 1:2 mol ratio + 15% wt citric acid

Table 6

| | **% metals leached** | | |
|---|---|---|---|
| **Time of reaction (h)** | **Nd** | **Dy** | **Pr** |
| 0.5 | 32.72 | 21.28 | 31.34 |
| 1 | 58.39 | 43.31 | 54.52 |

(continued)

| | % metals leached | | |
|---|---|---|---|
| Time of reaction (h) | Nd | Dy | Pr |
| 1.5 | 71.23 | 56.67 | 61.53 |
| 2 | 70.51 | 58.04 | 63.21 |
| 3 | 100.0 | 79.60 | 77.98 |
| 4 | 100.0 | 85.15 | 99.44 |
| 5 | 100.0 | 83.39 | 94.64 |
| 20 | 100.0 | 85.91 | 93.61 |

Table 7. Choline chloride/lactic acid 1:3 mol ratio + 15% wt citric acid

Table 7

| | % metals leached | | |
|---|---|---|---|
| Time of reaction (h) | Nd | Dy | Pr |
| 0.5 | 51.85 | 36.56 | 49.28 |
| 1 | 81.81 | 66.19 | 73.90 |
| 1.5 | 101.71 | 78.68 | 91.95 |
| 2 | 66.75 | 55.47 | 48.97 |
| 3 | 100.0 | 82.78 | 83.39 |
| 4 | 100.0 | 77.58 | 82.30 |
| 5 | 100.0 | 74.18 | 86.66 |
| 20 | 100.0 | | 100.0 |

Table 8. Choline chloride/lactic acid 1:2 mol ratio + 10% wt malonic acid

Table 8

| | % metals leached | | |
|---|---|---|---|
| Time of reaction (h) | Nd | Dy | Pr |
| 0.5 | 55.6 | 26.5 | 51.6 |
| 1 | 56.4 | 23.0 | 58.2 |
| 1.5 | 65.3 | 27.6 | 64.6 |
| 2 | 79.0 | 46.0 | 74.6 |
| 3 | 86.4 | 61.8 | 81.3 |
| 4 | 88.9 | 66.4 | 84.0 |
| 5 | 91.9 | 77.2 | 88.4 |

Table 9. Choline chloride/lactic acid 1:2 mol ratio

Table 9

| | % metals leached | | |
|---|---|---|---|
| Time of reaction (h) | Nd | Dy | Pr |
| 0.5 | 31.6 | 20.9 | 36.6 |
| 1 | 39.9 | 17.6 | 43.5 |
| 1.5 | 43.9 | 19.7 | 46.1 |
| 2 | 52.8 | 26.1 | 53.8 |
| 3 | 63.5 | 41.2 | 62.6 |
| 4 | 66.8 | 43.8 | 65.7 |
| 5 | 71.8 | 50.3 | 67.3 |

In the following table the results of the process of extracting the REEs from a swarf dissolution (as described in the comparative example above) with the DES of the example 1 is shown:

Table 10. Choline chloride/lactic acid 1:2 mol ratio + 15% wt citric acid

Table 10

| % metals leached | | | |
|---|---|---|---|
| Time of reaction (h) | Nd | Dy | Pr |
| 0.5 | 7.8 | 9.0 | 9.7 |
| 1 | 8.9 | 10.6 | 11.4 |
| 1.5 | 10.2 | 12.0 | 12.9 |
| 2 | 11.1 | 13.1 | 14.2 |
| 3 | 12.1 | 14.2 | 14.5 |
| 4 | 11.1 | 16.0 | 16.4 |
| 5 | 11.8 | 17.2 | 17.7 |
| 20 | 19.9 | 23.6 | 25.9 |

The results above show that with the process of the invention it is possible to dissolve at least up to 70% of rare earths (Nd, Dy and Pr) present in permanent magnets in 4-5 hours when using the binary or ternary DESs disclosed in the present invention. On the other hand, the same type of DES can only dissolve up to 20 to 26% of one or more rare earths present in the swarf.

**Citation List**

Dupont D. et al, "Recycling of rare earths from NdFeB magnets using a combined leaching/extraction system based on the acidity and thermomorphism of the ionic liquid [Hbet][Tf2N]", Green Chem., 2015, 17, 2150-2163

Rozelle P., "A Study on Removal of Rare Earth Elements from U.S. Coal Byproducts by Ion Exchange", Metallurgical and Materials Transactions E 2016, Volume 3, Issue 1, pp. 6-17.

Smith E.L. et al, "Deep Eutectic Solvents (DESs) and Their Applications", Chem. Rev. 2014,114,11060-11082.

## Claims

1. A process for the extraction of rare earth elements from a starting solid product containing them in metal or alloy form which comprises the steps of:

    a) contacting the starting product containing rare earth elements in metal or alloy form with a deep eutectic solvent that consists of a mixture of

        (i) a hydrogen bond acceptor (HBA) compound (A) selected from

            a) a salt of the formula $Cat^+X^-$ (I), wherein $Cat^+$ is a cation selected from the group consisting of any ammonium, imidazolium, and phosphonium, and $X^-$ is a Lewis base;
            b) betaine or a salt thereof;
            c) carnitine or a salt thereof; and

        (ii) a hydrogen bond donor compound (B)

    in a molar ratio of (A) to (B) from 1:10 to 10:1,
    wherein the deep eutectic solvent is capable of extracting at least 50% w/w of one or more rare earth elements contained in the starting solid product in less than 5 hours when the step of contacting the starting product containing rare earth elements with the deep eutectic solvent is carried out at a temperature from 60-90 °C and in a weight ratio solid to liquid from 1:15 to 1:150; and
    b) separating the solvent containing the rare earth elements in dissolution from the undissolved solid.

2. The process according to claim 1, wherein the hydrogen bond acceptor (HBA) compound (A) is a salt of the formula $Cat^+X^-$ (I).

3. The process according to claim 2, wherein the cation of the salt of the formula $Cat^+X^-$ (I) is a quaternary ammonium cation $NR_4^+$ or a phosphonium cation $PR_4^+$, wherein each R is independently selected from the group consisting of H, phenyl optionally substituted with halogen, and ($C_1$-$C_{18}$)alkyl optionally substituted with one or more substituents selected from the group consisting of phenyl optionally substituted with halogen, halogen, OH, -OCO($C_1$-$C_6$)alkyl, -OCOY, -COO($C_1$-$C_6$)alkyl, and COOH, wherein Y is halogen.

4. The process according to any one of claims 1-3, wherein the Lewis base $X^-$ is selected from the group consisting of $NO_3^-$, $F^-$, $Cl^-$, $Br^-$, $I^-$, $BF_4^-$, $ClO_4^-$, $CN^-$, $SO_3CF_3^-$, or $COOCF_3^-$.

5. The process according to any one of claims 1-4, wherein the hydrogen bond donor (HBD) compound (B) in the deep eutectic solvent is selected from ($C_1$-$C_{12}$)alcohol, ($C_1$-$C_{12}$)aldehyde, ($C_1$-$C_{18}$)carboxylic acid, ($C_1$-$C_6$)urea, ($C_1$-$C_{12}$)amide, ($C_1$-$C_{12}$)nitrogenated compound, ($C_1$-$C_{12}$)aminoacid and ($C_1$-$C_{12}$)sugar.

6. The process according to claim 5, wherein the hydrogen bond donor (HBD) compound (B) is either a ($C_1$-$C_6$)urea selected from the group consisting of urea, 1-(trifluoromethyl)-urea, 1-methylurea, allylurea, 1,3-dimethylurea, 1,1-dimethylurea, thiourea, and tetramethylurea, or alternatively the hydrogen bond donor (HBD) compound (B) is a ($C_1$-$C_{18}$)carboxylic acid selected from the group consisting of trifluoroacetic acid, glycolic acid, trichloroacetic acid, glyoxylic acid, benzoic acid, citric acid, mandelic acid, valeric acid, tartaric acid, glutaric acid, m-nitrobenzoic acid, p-hydroxybenzoic acid, glutamic acid, m-aminobenzoic acid, malonic acid, oxalic acid, benzoic acid, phenylacetic acid, phenylpropionic acid, itaconic acid, levulinic acid, propane-1,2,3-tricarboxylic acid (tricarballylic acid), salicylic acid, trans-cinnamic acid, 3,5-dinitrobenzoic acid, nicotinic acid, stearic acid, hippuric acid, oleic acid, terephthalic acid, adipic acid, malic acid, succinic acid, acetic acid, and lactic acid.

7. The process according to any one of claims 1-6, wherein in the deep eutectic solvent the hydrogen bond acceptor compound (A) and the hydrogen bond donor (HBD) compound (B) are in a molar ratio of (A) to (B) from 1:1 to 1:5.

8. The process according to any one of claims 1-7, wherein the deep eutectic solvent further comprises a second hydrogen bond donor (HBD) compound, thereby forming a ternary deep eutectic solvent.

9. The process according to claim 8, wherein the second hydrogen bond donor (HBD) compound (B) in the ternary deep eutectic solvent is selected from ($C_1$-$C_{12}$)alcohol, ($C_1$-$C_{12}$)aldehyde, ($C_1$-$C_{18}$)carboxylic acid, ($C_1$-$C_6$)urea,

$(C_1-C_{12})$amide, $(C_1-C_{12})$nitrogenated compound, $(C_1-C_{12})$aminoacid and $(C_1-C_{12})$sugar.

**10.** The process according to claim 8, wherein the second hydrogen bond donor (HBD) compound is a $(C_1-C_{18})$carboxylic acid selected from the group consisting of trifluoroacetic acid, glycolic acid, trichloroacetic acid, glyoxylic acid, benzoic acid, citric acid, mandelic acid, valeric acid, tartaric acid, glutaric acid, m-nitrobenzoic acid, p-hydroxybenzoic acid, glutamic acid, m-aminobenzoic acid, malonic acid, oxalic acid, benzoic acid, phenylacetic acid, phenylpropionic acid, itaconic acid, levulinic acid, propane-1,2,3-tricarboxylic acid (tricarballylic acid), salicylic acid, trans-cinnamic acid, 3,5-dinitrobenzoic acid, nicotinic acid, stearic acid, hippuric acid, oleic acid, terephthalic acid, adipic acid, malic acid, succinic acid, acetic acid and lactic acid.

**11.** The process according to claim 10, wherein the second hydrogen bond donor (HBD) compound is present in an amount from 5 wt% to 20 wt% with respect to the total weight of deep eutectic solvent.

**12.** The process according to any one of claims 1-11, wherein the deep eutectic solvent is selected from the group consisting of: choline chloride:lactic acid, choline chloride:lactic acid and citric acid, choline chloride:lactic acid and malonic acid, betaine:urea, carnitine:glycolic acid, betaine:glycolic acid and ethylammonium chloride:glycolic acid, wherein betaine and carnitine may optionally be in the form of hydrochloride salt.

**13.** The process according to any one of claims 1-12, wherein the starting product containing rare earth elements in metal or alloy form is a permanent magnet.

**14.** The process according to any one of claims 1-13, wherein the contacting rare earth elements with a deep eutectic solvent is carried out at a temperature from 60 to 90 °C and in a weight ratio solid to liquid from 1:15 to 1:150.

**15.** The process according to any one of claims 1-14, further comprising the step of recovering the rare earth elements from the solvent of the previous step.

Europäisches Patentamt
European Patent Office
Office européen des brevets

# EUROPEAN SEARCH REPORT

Application Number
EP 17 38 2134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FOREMAN, M.R.STJ: "Progress towards a process for the recycling of nickel metal hydride electric cells using a deep eutectic solvent", COGENT CHEMISTRY, vol. 2, 19 January 2016 (2016-01-19), pages 1-11, XP002773405, | 1-12,14, 15 | INV. C22B7/00 C22B59/00 |
| A | * the whole document * | 13 | |
| | ----- | | |
| A,D | DUPONT D. ET AL.: "Recycling of rare earths from NdFeB magnets using a combined elaching/extraction system based on the acidity and thermomorphism of the ionic liquid [Hbet][Tf2N]", GREEN CHEM., vol. 17, 2015, pages 2150-2163, XP002773406, | 1-15 | |
| | ----- | | |
| A | GADILOHAR BALU L ET AL: "Choline based ionic liquids and their applications in organic transformation", JOURNAL OF MOLECULAR LIQUIDS, vol. 227, 10 December 2016 (2016-12-10), pages 234-261, XP029882534, ISSN: 0167-7322, DOI: 10.1016/J.MOLLIQ.2016.11.136 * the whole document * | 1-15 | TECHNICAL FIELDS SEARCHED (IPC) C22B |
| | ----- | | |
| A | EMMA L. SMITH ET AL: "Deep Eutectic Solvents (DESs) and Their Applications", CHEMICAL REVIEWS, vol. 114, no. 21, 12 November 2014 (2014-11-12), pages 11060-11082, XP055258803, US ISSN: 0009-2665, DOI: 10.1021/cr300162p * the whole document * | 1-15 | |
| | ----- | | |
| | -/-- | | |

1 The present search report has been drawn up for all claims

| Place of search | Date of completion of the search | Examiner |
|---|---|---|
| Munich | 5 September 2017 | Juhart, Matjaz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 17 38 2134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANDREW P. ABBOTT ET AL: "Deep Eutectic Solvents Formed between Choline Chloride and Carboxylic Acids: Versatile Alternatives to Ionic Liquids", JOURNAL OF THE AMERICAN CHEMICAL SOCIETY, vol. 126, no. 29, 1 July 2004 (2004-07-01), pages 9142-9147, XP055254619, ISSN: 0002-7863, DOI: 10.1021/ja048266j * the whole document * ----- | 1-15 | |
| A | JENKIN GAWEN R T ET AL: "The application of deep eutectic solvent ionic liquids for environmentally-friendly dissolution and recovery of precious metals", MINERALS ENGINEERING, PERGAMON PRESS , OXFORD, GB, vol. 87, 9 October 2015 (2015-10-09), pages 18-24, XP029393827, ISSN: 0892-6875, DOI: 10.1016/J.MINENG.2015.09.026 * the whole document * ----- | 1-15 | |
| | | | TECHNICAL FIELDS SEARCHED (IPC) |

1

The present search report has been drawn up for all claims

| Place of search | Date of completion of the search | Examiner |
|---|---|---|
| Munich | 5 September 2017 | Juhart, Matjaz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **DUPONT D. et al.** *Green Chem.,* 2015, vol. 17, 2150-2163
- *Metallurgical and Materials Transactions E,* 2016, vol. 3 (1), 6-17
- **SMITH E.L. et al.** *Chem. Rev.,* 2014, vol. 114, 11060-11082
- **DUPONT D. et al.** Recycling of rare earths from NdFeB magnets using a combined leaching/extraction system based on the acidity and thermomorphism of the ionic liquid [Hbet][Tf2N]. *Green Chem.,* 2015, vol. 17, 2150-2163
- **ROZELLE P.** A Study on Removal of Rare Earth Elements from U.S. Coal Byproducts by Ion Exchange. *Metallurgical and Materials Transactions E,* 2016, vol. 3 (1), 6-17
- **SMITH E.L. et al.** Deep Eutectic Solvents (DESs) and Their Applications. *Chem. Rev.,* 2014, vol. 114, 11060-11082